# EUROPEAN PATENT SPECIFICATION

(11) **EP 1 350 717 B1**
(45) Date of publication and mention of the grant of the patent: **14.06.2006**
(21) Application number: 03075979.9
(22) Date of filing: 02.04.2003
(51) Int. Cl.: B64D 45/00, E06B 5/10, F41H 5/04

(54) **Ballistic resistant flight deck door and method of making same**
Ballistische Cockpittür und Herstellungsverfahren
Porte pare-balles pour un poste de pilotage et procédé de fabrication

(30) Priority: 05.04.2002 US 370365; 05.04.2002 US 370432; 03.01.2003 US 336592
(43) Date of publication of application: 08.10.2003
(60) Divisional application: 05076447.1
(73) Proprietor: The Boeing Company, Seattle, Washington 98124-2207 (US)
(72) Inventor: Cloud, Michael J., Snohomish, Washington 98296 (US); Dovey, John V., Seattle, Washington 98124-2207 (US)
(74) Representative: Land, Addick Adrianus Gosling

(56) References cited:
- EP-A- 1 172 512
- CH-A- 691 497
- US-A- 4 198 454
- US-A- 4 567 100

## Description

### FIELD OF THE INVENTION

The present invention relates to flight deck doors for aircraft, and particularly relates to ballistic and intruder proof flight deck doors for aircraft.

### BACKGROUND OF THE INVENTION

Most aircraft have a fuselage which defines a passenger section, a cargo section, and a pilot or flight deck section. Most of the passenger section and the flight deck are pressurized portions of the aircraft adapted to carrying people. The flight deck is generally separated from the passenger area by a door, sometimes referred to as the "cockpit door", which limits entry to the flight deck but is not meant to be impenetrable by a firearm or person, even when closed.

Most often the flight deck door simply provides a temporary impediment between the passenger section and the flight deck or pilot section. Most often it functions to simply isolate the pilots from the passengers so that they are not disturbed by the passengers during a flight. The flight deck door may also provide acoustic dampening for the flight deck, both to assist in quieting the flight deck and to shield the flight deck from the noise generated in the passenger area. In particular, the flight deck is generally situated at the front of an aircraft and therefore it is buffeted most by the oncoming wind of the atmosphere as the aircraft proceeds in flight. This wind noise can be particularly loud in the flight deck, but is dampened by an appropriately constructed flight deck door.

Recent events, however, have also made it desirable to provide a greater degree of fortitude to the flight deck door. In particular, it has become desirable to make the flight deck door substantially impervious to ballistic and intruder attacks. It is desirable to add these features so that if an attacker is amongst the passengers, in the passenger area, the flight deck door will provide a substantial, if not impervious, blockade to any attack by a person on the pilot and co-pilot. In this way the pilot can continue to control the aircraft regardless of the action of an attacker in the passenger section and guide the plane to safety. Furthermore, this can reduce or substantially eliminate the possibility that a person in the passenger section gains unauthorized access to the flight deck to gain control of the aircraft.
US-A-4 567 100 discloses a door having the feature of the preamble of claim 1.

### SUMMARY OF THE INVENTION

The above and other features and advantages are provided by a door in accordance with claim 1. Preferred embodiments are defined in dependent claims 2-11.

Further areas of applicability of the present invention will become apparent from the detailed description provided hereinafter. It should be understood that the detailed description and specific examples, while indicating the preferred embodiments of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a detail perspective view of an aircraft with a flight deck door according to the present invention;

Figure 2 is a cross-sectional view of ballistic and intruder resistant flight deck door including acoustic dampening effects along line A-A of Figure 1 according to a first embodiment of the present invention; and

Figure 3 is a cross-sectional view of a ballistic resistant and intruder proof flight deck door along line A-A of Figure 1 according to a second embodiment of the present invention.

### DETAILED DESCRIPTION OF THE PREFERRED EMBODIMENTS

The following description of the preferred embodiment(s) is merely exemplary in nature and is in no way intended to limit the invention, its application or uses.

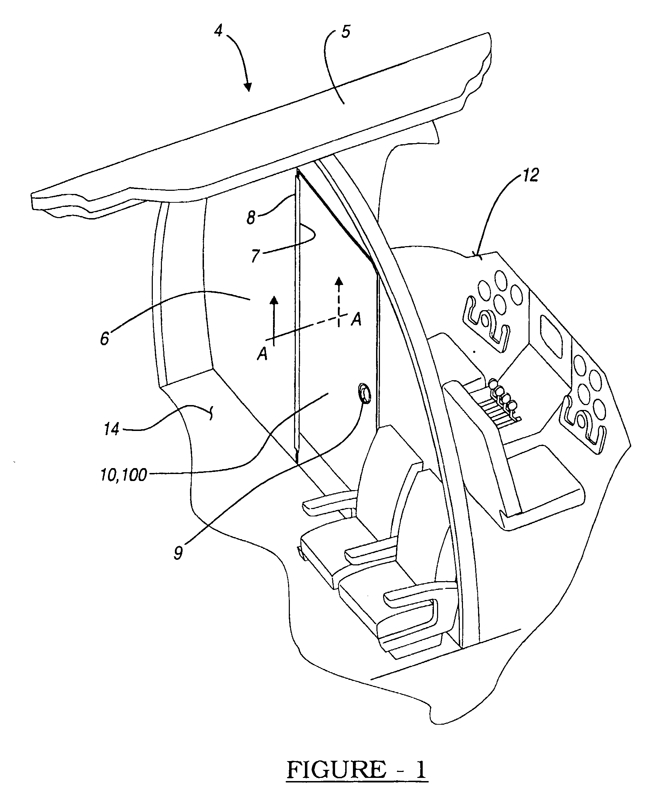

With reference to figure 1 an aircraft 4 includes an exterior skin 5 defining a fuselage. The inside of the aircraft 4 includes a flight deck wall 6 including a flight deck door 10. The flight deck wall 6 and flight deck door 10 separate the flight deck area or side 12 from the passenger area or side 14. The flight deck door 10 allows restricted access to the flight deck side 12 from the passenger side 14. The flight deck door 10 may also be used as a door at other locations within the fuselage if desired. Generally, the flight deck door 10 is formed to fit into a door jam in the flight deck wall 6. One side the flight deck door 10 includes a hinge 7 which mates with a hinge 8 of the door jam. This allows the flight deck door 10 to be easily opened and closed. Also, the flight deck door 10 includes a door latch or locking mechanism 9. The locking mechanism 9 mates with a jam locking mechanism (not particularly shown) on the door jam to lock the flight deck door 10 in a closed position. The particulars of these portions are not relevant to the present invention, but are understood to be a part of any functioning flight deck door 10.

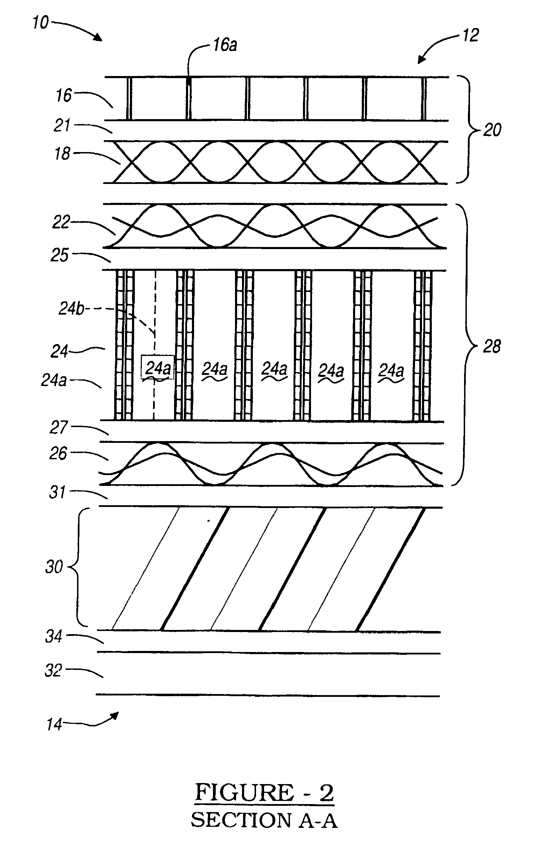

With reference to Figure 2, a cross section of the an intrusion and bullet proof and acoustic dampening flight deck door along line A-A is illustrated according to a first preferred embodiment of the present invention. Though It is understood that the physical dimensions of the section is not proportional to more clearly illustrate the flight deck door 10. The flight deck door 10 is installed in the aircraft 4 such that a first or flight deck side 12 faces the flight deck and a second or passenger side 14 faces a passenger compartment.

The flight deck door 10 is a laminated door comprising a plurality of individual layers. Each layer is affixed to an adjacent layer with an appropriate method. Generally, either cold curing or heated curing is used along with appropriate adhesives. Cold curing is used to define an adhesive or process that cures at generally room temperature or about 21° C (70° F). Heated curing is any method which requires heating to a temperature greater than room temperature. Each layer provides a certain amount of rigidity to the flight deck door 10. The entire flight deck door 10, however, is preferably approximately 25.4 mm (1.0 inch) thick. It will be understood that the flight deck door 10 may also include a door which is thicker than 1.0 inch, but excessively thick doors are generally undesirable because of the added weight they impose.

The flight deck door 10 includes a first layer 16 that comprises a perforated decorative laminate. The first layer 16 simply provides a decorative covering to the flight deck door 10. It would be understood that the decorative laminate may be any appropriate decorative material. It will be understood, however, that if decoration or aesthetics are not a primary concern, then the first layer 16 is not needed. Perforations 16a in the first layer 16 also provide the initial acoustic dampening feature. Therefore, if a first layer 16 is desired, it is preferably perforated. The first layer 16, however, also provides a degree of rigidity to the flight deck door 10.

A second layer 18 is an acoustic fabric. Part of the function of the flight deck door 10 is to dampen acoustic noise from the flight deck side 12. The second layer 18 provides a first means of acoustic dampening by providing a first muffling layer for the flight deck door 10. The perforations in the first layer 16 allow sound waves to pass therethrough and become initially muffled in the second layer 18, while also continuing through the second layer 18.

The first layer 16 and second layer 18 form a first laminate section 20. The first laminate section 20 is held together by a suitable adhesive layer 21, and preferably a room temperature adhesive, such as that generally known in the art, to provide a permanent attachment of the first layer 16 to the second layer 18. Preferably the adhesive layer 21 is a two part polyester cold curing adhesive. It will be understood, however, that if a decorative laminate first layer 16 is not desired, then the first section 20 will include only the second layer 18.

A third layer 22 includes a fiberglass epoxy prepreg. The fiberglass epoxy prepreg preferably comprises a "fly screen fabric". The third layer 22 generally includes fiberglass strands interweaved to form an open square lattice structure, similar to that of a house window screen. The open holes in the third layer 22 generally have a side length between about 0.10 inch and about 0.50 inch (about 0.25 cm and about 1.30 cm). Furthermore, the fiberglass strands of the third layer 22 are pre-impregnated with an epoxy. The third layer 22 provides some rigidity and strength to the flight deck door 10 and does not require a separate adhesive to affix it to a fourth layer 24. In particular, the epoxy not only provides rigidity to the third layer 22, but also functions as an adhesive layer 25 between the third layer 22 and the fourth layer 24 to secure these layers. It will be understood, however, that the adhesive layer 25 may include a separate appropriate adhesive if required.

The fourth layer 24 is a honeycomb acoustic core. In particular, the fourth layer 24 includes a plurality of open cells 24a. Each open cell 24a is formed along a central axis 24b and the central axis 24b is arranged perpendicular to the plane formed by the flight deck door 10. Each cell of the fourth layer 24 has a length of between about 0.50 inches and about 1.0 inches (about 1.25 cm and about 2.50 cm) and cross-sectional diameter of between about 0.05 inches and about 0.50 inches (about 1.00 cm and about 1.50 cm). The fourth layer 24 provides the main acoustic dampening feature of the flight deck door 10. Sound waves enter the open cell structure of the fourth layer 24 and lose most of their energy in the open cell structure.

A fifth layer 26 includes a second fiberglass epoxy prepreg layer. The fifth layer 26 is substantially similar to the third layer 22 described above. It will also be understood that the fifth layer 26 can form the adhesive layer 27, between the fourth layer 24 and the fifth layer 26, a distinct adhesive layer 27 may also be provided. The third layer 22, fourth layer 24, and fifth layer 26 form a second section 28 which is cured in a multi-opening press. The multi-opening press (not illustrated) is commonly known in the art. Generally, the multi-opening press receives a plurality of layers which can be laminated and cured under the same physical conditions. Therefore, a plurality of second sections 28 can be formed at one time in a multi-opening press.

A sixth layer is an armor layer 30. The armor layer 30 may include any appropriate armor material. Preferably the armor layer 30 includes a plurality of Kevlar® armor layers. Kevlar® armor is known to provide substantial ballistic resistance to firearm projectiles. The armor layer 30 generally includes preferably between about 15 and about 25 Kevlar® armor layers. The armor layer 30 is generally between about 0.10 inch and about 0.60 inch thick (about 0.25 cm and about 1.52 cm). More preferably, layers of Kevlar®, impregnated with a PVB phenolic resin at about 15% fluidizable resin, are employed to provide the desired ballistic resistance. These individual Kevlar® armor layers are laminated to form the armor layer 30, described further herein. The armor layer 30 is affixed to the second section with an adhesive layer 31. The adhesive layer may be any appropriate adhesive that is known in the art, such as a two part epoxy cold curing adhesive.

A seventh layer 32 is a second decorative laminate. The seventh layer 32 need not be perforated as is the first layer 16. The seventh layer 32 does not need to provide an acoustic dampening function for the passenger compartment. The seventh layer 32 is employed simply to blend the flight deck door 10 into the surroundings of the passenger compartment. Additionally, an adhesive layer 34 of any appropriate and known adhesive is used to affix the seventh layer 32 to the exterior of the armor layer 30.

The flight deck door 10 according to the first embodiment includes acoustic dampening properties. In particular, the flight deck door 10 is particularly well suited for use in a Boeing 747-400 aircraft. It is understood, however, that the acoustic dampening properties of the flight deck door 10 may be used in any appropriate aircraft and are not limited to a Boeing 747-400 aircraft.

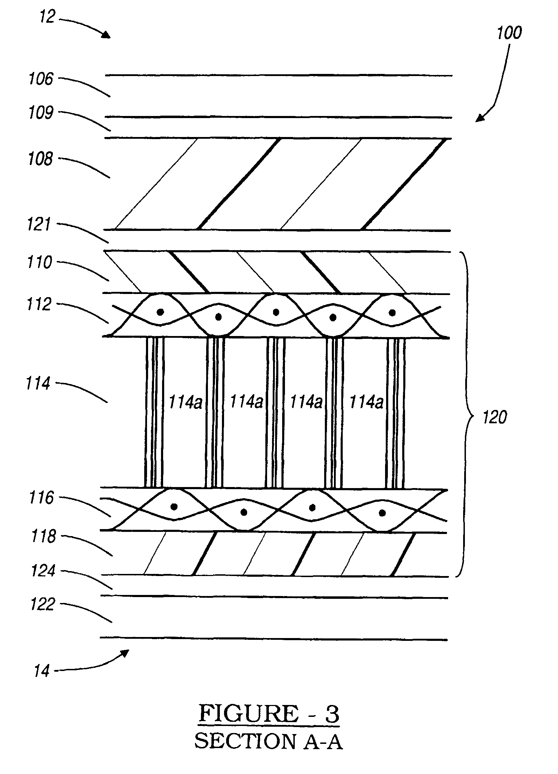

With reference to Figure 1 and 3, a second embodiment of an intrusion resistant and bullet proof flight deck door 100 is illustrated. The flight deck door 100 is installed in the flight deck wall 6 of an aircraft 4 including hinges 7 and 8 and a door latch 9 the flight deck side 12 and the passenger side 14. The flight deck door 100 is a laminated door comprising a plurality of individual layers. Each layer is affixed to an adjacent layer with an appropriate method. Generally, either cold curing or heated curing, as described herein, is used along with the appropriate adhesives. Each layer provides a certain amount of rigidity to the flight deck door 100. The entire flight deck door 100, however, is approximately 25.4 mm (1.0 inch) thick. It will be understood that the flight deck door 100 may also include a door which is thicker than 1.0 inch, but limiting the weight of the door is also an important counter veiling consideration in any door design desirable to be as small as possible thereby reducing weight on the aircraft.

A first decorative laminate layer 106 on the flight deck side 12 provides an aesthetic covering for the flight deck door 100. It will be understood that the decorative laminate layer 106 may be an appropriate decorative laminate. Additionally, an adhesive layer 109 of any appropriate and known adhesive is used to affix the first layer 106 to the exterior of the armor layer 108. It will also be understood that the first decorative laminate layer 106 is not absolutely necessary for the flight deck door 100. In particular, if aesthetics are not a primary concern, the first decorative laminate layer 106 can be omitted.

Next, an armor layer 108 provides ballistic and intruder resistance to the flight deck door 100. The armor layer 108 includes preferably between about 10 and about 15 armor laminate layers. Preferably, Kevlar® laminate layers are used, though it will be understood any appropriate number of any appropriate armor laminate may be used. More preferably about 12 layers of Kevlar® laminate layers are laminated together to form the armor layer 108. The armor layer 108 is preferably between about 0.25 cm and about 0.76 cm (about 0.10 inch and about 0.30 inch) thick. The armor layer 108 is formed in a process similar to the process of forming the armor layer 30.

A third or first minor armor layer 110 may also include Kevlar® armor layers. The third layer 110 provides additional rigidity, as well as a degree of ballistic and intrusion resistance to the flight deck door 100. It is understood, however, that the armor layer 108 provides substantially all of the ballistic and intruder resistance of the flight deck door 100. The third layer 110 comprises between about 2 and about 5 laminate armor layers. Preferably, Kevlar® 745 armor is used. Again, the formation of the third layer 110 is substantially identical to the formation of the armor layer 108.

The fourth layer 112 is a fiberglass phenolic prepreg. The fiberglass phenolic prepreg comprises a "woven fabric". The fourth layer 112, however, includes about 40% fluidizable resin. Therefore, there is a greater resin volume between the third layer 110 and the core or fifth layer 114. This provides a substantial amount of resin which allows the armor layer 108 to bond to the core layer 114.

The core layer 114 is preferably between about 0.40 and about 0.80 inches thick. The core layer 114 may be similar or identical to the honeycomb layer 24 of door 10 or may be formed by any other appropriate core layer of material. Preferably, the core layer 114 of the flight deck door 100 is a material other than the core layer 24 according to the first embodiment. In particular, the core layer 114 is a honeycomb layer which includes an open cell 114a and is approximately 8 pounds per cubic foot. It will be understood, however, that if other layers provide sufficient rigidity, then the core layer 114 may be omitted.

A sixth layer 116 is a second layer of the fiberglass phenolic prepreg. While a seventh or second minor armor layer 118 is another layer of armor laminate. The seventh layer 118 is substantially similar to the third layer 110 described above. The third layer 110 through the seventh layer 118 are formed together in a multi-opening press to form a main section 120. Furthermore, each Kevlar® armor layer of the minor armor layers 110 and 118 may be placed in the multi-opening press separately and cured with the main section 120. This removes additional steps of individually laminating and curing the minor armor layers 110 and 118.

The main section 120 provides the backbone to which the armor layer 108 is affixed with an adhesive layer 121. It will be understood that the adhesive layer 121 is any appropriate and known adhesive such as a two part epoxy cold curing adhesive. Furthermore, the main section 120 is affixed together with the fluidizable resin from the fiberglass phenolic prepreg of the fourth layer 112 and the sixth layer 116. It will be understood, however, that a separate adhesive may be used if desired.

Finally, an eighth layer 122 includes a decorative laminate. The eighth layer 122 may be any appropriate decorative laminate. Again, it will be understood that if aesthetics are not a primary concern of the flight deck door 100 the decorative laminate 122 may be eliminated. Also, an adhesive layer 124 of any appropriate and known adhesive is used to affix the eighth layer 122 to the main section 120.

The flight deck door 100, according to the second preferred embodiment to the present invention, does not include any acoustic dampening material that the door 10 includes. Thus, the flight deck door 100, does not include any acoustic dampening layer on the flight deck side 12. Neither the first layer 106 or the armor layer 108 are acoustically dampening. The armor layer 108 provides the ballistic intrusion resistance of the flight deck door 100.

The armor layers 30 and 108, and minor armor layers 110 and 118, of the main section 120, are formed preferably of Kevlar® armor layers. The armor layers 30, 108 and the main section 120 are also formed in a multi-opening press. Additionally, the armor layers 30, 108 and the main section 120 are formed under the same physical circumstances and conditions so that these layers may be formed at one time in a multi-opening press. Alternately, numerous layers of a particular armor layer, such as the armor layer 30, or main section 120 can be formed at one time.

While the armor layer 30 will be referenced in the following description of forming the armor layer, it will be understood that the other armor layers 108, and main section 120 are formed in a substantially similar manner. The armor layer 30 includes preferably 20 Kevlar® armor layers. These 20 Kevlar® armor layers are placed into a multi-opening press one on top of another. They are then subjected to temperatures of between about 120°C and about 146°C (250° F and about 295° F) and between about 5 and about 30 pounds per square inch (psi) of pressure. The plurality of individual layers of Kevlar® armor are subjected to these conditions for as little as about 30 minutes, and generally between about 60 minutes and about 120 minutes. This process forms the armor layer 30 when the plurality of individual Kevlar® armor layers have been cured and are then affixed together as a single layer or substructure. Nevertheless, the armor layer 30 is formed as a discrete laminate layer. After curing, the armor layer 30 is then cut to the desired dimensions needed to form the flight deck door 10, and is affixed to section 28 with a cold curing adhesive. Cold curing adhesive is defined to include any adhesive which is not required to be heated to cure properly. It will be understood, however, that a heat cured adhesive may also be used.

The process described above does not substantially reduce or hinder the effectiveness of the individual Kevlar® armor layers. For example, the lattice structure of the Kevlar® fibers is only minimally compressed or substantially uncompressed because low pressures are used in the process described above. Therefore, they are able to move and deflect the energy of a projectile as it enters the armor layer 30. Kevlar® armor layers provide ballistic resistance by deflecting and absorbing the energy of a projectile. If the fibers of the Kevlar® armor layers are compressed there is less space for them to move, thereby reducing the ballistic effectiveness of any one Kevlar® armor sub-layer.

Additionally, the low processing temperatures allow the resin to be less brittle in the individual Kevlar® armor layers. The greater the processing temperature of the Kevlar® armor layers, the lower the ballistic effectiveness becomes of the armor layer 30.

The armor layer 108 of the flight deck door 100 preferably includes only twelve layers of Kevlar® armor material. The construction and processing techniques described above reduce the number of layers required to provide the equivalent ballistic resistance of a greater number of layers. The armor layer 30 of the flight deck door 10 includes approximately twenty Kevlar® armor layers due to the fact that section 28 reduces the deflection of the armor layer 30. In particular, as described above, the armor layer 30 works best when it is able to deflect a distance to reduce the energy of the projectile. If that deflection is reduced, due to exterior or other constraints, such as section 28, then the armor layer 30 must be increased in thickness.

The flight deck doors 10 and 100 provide a significant degree of ballistic resistance. That is, the flight deck doors 10 and 100 completely stop many ballistic projectiles fired from a weapon. Effective penetration is when a projectile that is able to penetrate and cause damage after exiting a material. Therefore, even though a projectile passes completely through a material, it can be said that it has not effectively penetrated the material if it can not cause harm after escaping the material. In particular, a .44 magnum SJHP projectile, generally having a mass between about 11 g and about 20 g, reaching the door at velocities between about 426 m and about 487 m per second (between about 1400 and about 1600 feet per second (FPS)) cannot effectively penetrate the flight deck door 10 and 100. Therefore, the flight deck doors 10 and 100 substantially eliminate the possibility of a projectile being fired from the passenger side 14 and effectively penetrating the flight deck door 10, 100 to the flight deck side 12.

It will be understood that various other alternatives may also use an armor layer as described in the present application. An alternative embodiment may be similar to the first embodiment, illustrated in Figure 2, except that the first lamination layer 20 is replaced with a non-perforated decorative laminate similar to layer 106, illustrated in Figure 3. In addition, layer 22 may be replaced with a woven glass phenolic prepreg similar to layer 26. Lastly, layer 30 may include any required number of Kevlar® layers to provide the ballistic resistance required for the flight deck door 10. Also, armor layer 30 may be positioned between the first section 20 and the second section 28. This alternative embodiment provides excellent ballistic resistance, especially on "gaps." Gaps may be formed due to structural requirements such as fasteners to install the door in the aircraft. Such gaps in the structure of the door can provide weak areas which may be more susceptible to intrusion. Nevertheless including a larger armor layer on the passenger compartment side of the door may decrease the effect that such fasteners and gaps have on the resistance of the armor layer.

The description of the invention is merely exemplary in nature and, thus, variations that do not depart from the scope of the invention as claimed are intended to be within the scope of the invention. Such variations are not to be regarded as a departure from the scope of the invention.

## Claims

1. A door (10, 100) for a flight deck of an aircraft or other mobile platform to provide security to a designated area (12) of the mobile platform, the door comprising:
- a laminated member having a first side (12) and a second side (14) including:
- an armor layer (30, 108, 110, 118), having a first discrete laminated structure;
- a rigid layer (24, 114), having a second discrete structure, closer to said second side (14) than said first side (12), adapted to provide at least one of additional rigidity and a first degree of projectile resistance to the door (10, 100); and
- wherein said armor layer (30, 108, 110, 118) provides an additional degree of projectile resistance to the door (10, 100) so as to substantially stop an effective penetration of a projectile to said first side (12) when the projectile enters from said second side (14), **characterized in that** said armor layer (30, 108, 110, 118) includes a Kevlar layer, said Kevlar layer comprising a lattice structure of substantially uncompressed Kevlar fibers that are able to move and deflect for absorbing the impact energy of a projectile.

2. The door of claim 1, wherein said armor layer (30, 108, 110, 118) includes a polymeric lattice material.

3. The door of claim 1 or 2, wherein said rigid layer (24, 114) includes an open cell structure, wherein an axis of said open cell structure is perpendicular to a plane of the door (10, 100).

4. The door of any of claims 1-3, wherein said armor layer (30, 108) dissipates substantially an entire force produced by the projectile when fired from a firearm.

5. The door of claim 4, wherein the force produced at the door (10, 100) by the projectile is the force produced by a projectile having a mass of at least 11 grams that impinges the door (10, 100) at a velocity of at least about 426 meters per second.

6. The door of any of claims 1-5, further comprising:
- a cold curing adhesive, for affixing said armor layer to said rigid layer (24, 114).

7. The door according to any of claims 1-6 for an aircraft to provide security to a flight deck of the aircraft, the flight deck door comprising:
- a flight deck side (12);
- a passenger side (14);
- an acoustic dampening layer;
- said armor layer (30) extending from said acoustic dampening layer closer to said passenger side (14) than to said flight deck side (12);
- wherein said acoustic dampening layer reduces acoustic noise in the flight deck; and
- wherein said armor layer (30) provides resistance to a ballistic projectile so as to stop penetration of the projectile to said flight deck side (12) when the projectile enters said door (10) from said passenger side (14).

8. The door of claim 7, wherein said open cell structure reduces a magnitude of a sound wave entering said acoustic dampening layer from said flight deck side (12) to substantially reduce the sound wave in the flight deck.

9. The door of claim 7 or 8, wherein said acoustic dampening layer comprises:
- a porous fabric (18) adapted to reduce a sound wave encountering said porous fabric;
- a porous lattice layer (22) impregnated with a fluidize-able resin;
- a rigid panel (24) having an open cell structure where an axis of the cells is generally perpendicular to a plane of the door (10);
- wherein said porous lattice layer (22) is positioned between said porous fabric (18) and said rigid panel (24); and
- wherein the fluidize-able resin is adapted to selectively and operably affix said porous fabric (18) to said rigid panel (24).

10. The door of claim 7, 8 or 9 further comprising:
- a cold curing adhesive (31), for affixing said armor layer (30) to said acoustic dampening layer.

11. An aircraft comprising:
- a passenger compartment (14);
- a flight deck (12);
- a portal allowing access to said flight deck (12) from said passenger compartment (14); and
- a flight deck door (10) according to any of claims 7-10, to selectively eliminate access through said portal from said passenger compartment to said flight deck.

## Patentansprüche

1. Tür (10, 100) für ein Cockpit eines Flugzeugs oder einer anderen mobilen Plattform, um Sicherheit für einen bestimmten Bereich (12) der mobilen Plattform bereitzustellen, wobei die Tür umfasst:
- ein geschichtetes Teil, welches eine erste Seite (12) und eine zweite Seite (14) aufweist und enthält:
- eine Panzerschicht (30, 108, 110, 118), welche eine erste diskrete geschichtete Struktur aufweist;
- eine feste Schicht (24, 114), welche eine zweite diskrete Struktur, dichter an der zweiten Seite (14) als an der ersten Seite (12), aufweist, welche geeignet ist, zusätzliche Festigkeit und/oder einen ersten Grad von Geschosswiderstandsfähigkeit an der Tür (10, 100) bereitzustellen; und
- wobei die Panzerschicht (30, 108, 110, 118) einen zusätzlichen Grad von Geschosswiderstandsfähigkeit an der Tür (10, 100) bereitstellt, um im Wesentlichen ein wirkungsvolles Eindringen eines Geschosses an der ersten Seite (12) zu unterbinden, wenn das Geschoss von der zweiten Seite (14) eindringt,
**dadurch gekennzeichnet,**
**dass** die Panzerschicht (30, 108, 110, 118) eine Kevlarschicht aufweist, wobei die Kevlarschicht eine Gitterstruktur aus im Wesentlichen nicht komprimierten Kevlarfasern umfasst, die sich bewegen und biegen können, um die Aufprallenergie eines Geschosses zu absorbieren.

2. Tür nach Anspruch 1, wobei die Panzerschicht (30, 108, 110, 118) einen polymeren Gitterwerkstoff aufweist.

3. Tür nach Anspruch 1 oder 2, wobei die feste Schicht (24, 114) eine offene Zellenstruktur aufweist, wobei eine Achse der offenen Zellenstruktur senkrecht zu einer Ebene der Tür (10, 100) ist.

4. Tür nach einem der Ansprüche 1-3, wobei die Panzerschicht (30, 108) im Wesentlichen eine gesamte Kraft abführt, welche durch das von einer Feuerwaffe abgefeuerte Geschoss verursacht wurde.

5. Tür nach Anspruch 4, wobei die durch das Geschoss verursachte Kraft an der Tür (10, 100) die Kraft ist, welche durch ein Geschoss mit einer Massen von mindestens 11 Gramm erzeugt wurde, das mit einer Geschwindigkeit von mindestens circa 426 Metern pro Sekunde auf die Tür (10, 100) prallt.

6. Tür nach einem der Ansprüche 1-5, weiterhin umfassend:
- einen kalt aushärtenden Klebstoff zum Befestigen der Panzerschicht an der festen Schicht (24, 114).

7. Tür gemäß einem der Ansprüche 1-6 für ein Flugzeug, um Sicherheit für ein Cockpit des Flugzeugs bereitzustellen, wobei die Cockpittür umfasst:
- eine Cockpitseite (12);
- eine Fluggastseite (14);
- eine Schalldämmschicht;
- die Panzerschicht (30), welche sich vor der Schalldämmschicht, dichter an der Fluggastseite (14) als an der Cockpitseite (12), erstreckt;
- wobei die Schalldämmschicht akustischen Lärm in dem Cockpit reduziert; und
- wobei die Panzerschicht (30) einen Widerstand für ein ballistisches Geschoss bereitstellt, um ein Eindringen des Geschosses an der Cockpitseite (12) zu unterbinden, wenn das Geschoss in die Tür (10) von der Fluggastseite (14) eindringt.

8. Tür nach Anspruch 7, wobei die offene Zellenstruktur eine Stärke einer Schallwelle verkleinert, welche von der Cockpitseite (12) in die Schalldämmschicht eindringt, um die Schallwelle in dem Cockpit im Wesentlichen zu reduzieren.

9. Tür nach Anspruch 7 oder 8, wobei die Schalldämmschicht umfasst:
- ein poröses Gewebe (18), welches geeignet ist, eine auf das poröse Gewebe auftreffende Schallwelle zu reduzieren;
- eine poröse Gitterschicht (22), welche mit einem verflüssigbaren Harz imprägniert ist;
- eine feste Lage (24), welche eine offene Zellenstruktur aufweist, wobei eine Achse der Zellen im Wesentlichen senkrecht zu einer Ebene der Tür (10) ist;
- wobei die poröse Gitterschicht (22) zwischen dem porösen Gewebe (18) und der festen Lage (24) angeordnet ist; und
- wobei das verflüssigbare Harz geeignet ist, um das poröse Gewebe (18) gezielt und funktionsmäßig an der festen Lage (24) anzubringen.

10. Tür nach Anspruch 7, 8 oder 9, ferner umfassend:
- einen kalt aushärtenden Klebstoff (31) zum Anbringen der Panzerschicht (30) an der Schalldämmschicht.

11. Flugzeug, umfassend:
- eine Fluggastabteilung (14);
- ein Cockpit (12);
- ein Portal, welches den Zugang zu dem Cockpit (12) von der Fluggastabteilung (14) zulässt; und
- eine Cockpittür (10) gemäß einem der Ansprüche 7-10, um selektiv den Zugang durch das Portal von der Fluggastabteilung zu dem Cockpit zu unterbinden.

## Revendications

1. Porte (10, 100) destinée à un poste de pilotage d'un avion ou une autre plateforme mobile afin de fournir un niveau de sécurité à une zone (12) désignée de la plateforme mobile, la porte comprenant :
- un élément stratifié ayant un premier côté (12) et un second côté (14) comportant :
- une couche (30, 108, 110, 118) de blindage, ayant une première structure stratifiée discontinue ;
- une couche rigide (24, 114), ayant une seconde structure discontinue, plus proche dudit second côté (14) que dudit premier côté (12), adaptée pour fournir au moins un parmi une rigidité additionnelle et un premier degré de résistance aux projectiles à la porte (10, 100) ; et
- dans laquelle ladite couche (30, 108, 110, 118) de blindage fournit un degré additionnel de résistance aux projectiles à la porte (10, 100) afin d'arrêter sensiblement une pénétration effective d'un projectile vers ledit premier côté (12) lorsque le projectile entre depuis ledit second côté (14), **caractérisée en ce que** ladite couche (30, 108, 110, 118) de blindage comporte une couche de Kevlar, ladite couche de Kevlar comprenant une structure en treillis de fibres de Kevlar sensiblement non comprimées qui sont capables de se déplacer et de dévier pour absorber l'énergie de l'impact d'un projectile.

2. Porte selon la revendication 1, dans laquelle ladite couche (30, 108, 110, 118) de blindage comporte un matériau polymérique en treillis.

3. Porte selon la revendication 1 ou 2, dans laquelle ladite couche rigide (24, 114) comporte une structure à alvéoles ouvertes, dans laquelle un axe de ladite structure à alvéoles ouvertes est perpendiculaire à un plan de la porte (10, 100).

4. Porte selon l'une quelconque des revendications 1 à 3, dans laquelle ladite couche (30, 108) de blindage dissipe sensiblement une force entière produite par le projectile lorsqu'il est fait feu avec une arme à feu.

5. Porte selon la revendication 4, dans laquelle la force produite au niveau de la porte (10, 100) par le projectile est la force produite par un projectile ayant une masse d'au moins 11 grammes qui frappe la porte (10, 100) à une vitesse d'au moins environ 426 mètres par seconde.

6. Porte selon l'une quelconque des revendications 1 à 5, comprenant en outre :
- un adhésif à durcissement à froid, destiné à appliquer ladite couche de blindage sur ladite couche rigide (24, 114).

7. Porte selon l'une quelconque des revendications 1 à 6 destinée à un avion pour fournir un niveau de sécurité à un poste de pilotage de l'avion, la porte du poste de pilotage comprenant :
- un côté (12) de poste de pilotage ;
- un côté (14) passagers ;
- une couche antibruit ;
- ladite couche (30) de blindage s'étendant depuis ladite couche antibruit plus proche dudit côté (14) passagers que dudit côté (12) de poste de pilotage ;
- dans laquelle ladite couche antibruit réduit un bruit acoustique dans le poste de pilotage ; et
- dans laquelle ladite couche (30) de blindage fournit une résistance à un projectile balistique afin d'arrêter une pénétration du projectile vers ledit côté (12) de poste de pilotage lorsque le projectile entre dans ladite porte (10) depuis le côté (14) passagers.

8. Porte selon la revendication 7, dans laquelle ladite structure à alvéoles ouvertes réduit une amplitude d'une onde sonore entrant dans ladite couche antibruit depuis ledit côté (12) de poste de pilotage pour réduire sensiblement l'onde sonore dans le poste de pilotage.

9. Porte selon la revendication 7 ou 8, dans laquelle ladite couche antibruit comprend :
- un tissu poreux (18) adapté pour réduire une onde sonore rencontrant ledit tissu poreux ;
- une couche poreuse (22) en treillis imprégnée d'une résine apte à une fluidisation ;
- un panneau rigide (24) ayant une structure à alvéoles ouvertes où un axe des cellules est généralement perpendiculaire à un plan de la porte (10) ;
- dans laquelle ladite couche poreuse (22) en treillis est positionnée entre ledit tissu poreux (18) et ledit panneau rigide (24) ; et
- dans laquelle la résine apte à une fluidisation est adaptée pour appliquer de manière sélective et fonctionnelle ledit tissu poreux (18) sur ledit panneau rigide (24).

10. Porte selon la revendication 7, 8 ou 9, comprenant en outre :
- un adhésif (31) à durcissement à froid, destiné à appliquer ladite couche (30) de blindage sur ladite couche antibruit.

11. Avion comprenant .
- un compartiment (14) passagers ;
- un poste (12) de pilotage ;
- une ouverture autorisant un accès vers ledit poste (12) de pilotage depuis ledit compartiment (14) passagers ; et
- une porte (10) de poste de pilotage selon l'une quelconque des revendications 7 à 10, destinée à éliminer de manière sélective un accès au travers de ladite ouverture depuis ledit compartiment passagers vers ledit poste de pilotage.
